# EUROPEAN PATENT SPECIFICATION

(11) **EP 2 248 782 B1**
(45) Date of publication and mention of the grant of the patent: **14.12.2016**
(21) Application number: 09380043.1
(22) Date of filing: 05.03.2009
(51) Int. Cl.: C04B 33/14, C04B 33/132

(54) **A process for making a ceramic tile, in which the waste is colour separated and reused**
Verfahren zur Herstellung von Keramikfliessen mit Rückgewinnung von weissen und gefärbten unbehandelten keramischen Abfällen
Procédé de fabrication de carreaux en céramique avec tri par couleur et récupération des déchets

(43) Date of publication of application: 10.11.2010
(73) Proprietor: Porcelanosa, S.A., 12540 Villarreal Castellón (ES)
(72) Inventor: Colonques García-Planas, Héctor, 12540 Villarreal (Castellón) (ES)
(74) Representative: Carvajal y Urquijo, Isabel

(56) References cited:
- EP-A- 1 721 877
- EP-A- 1 726 576

## Description

### FIELD OF THE INVENTION

The procedure of the invention refers to the field of manufacturing of ceramic tiles in porcelain stoneware, comprising a support and surface decoration, taking advantage of the colored crude ceramic scrap from waste and rejected products from the conventional production line and the powder from solid particle aspiration and filtration systems in said manufacturing lines.

### BACKGROUND OF THE INVENTION

The ceramic tiles consist of two different parts - the support or rib, and the decoration or enamelled/glass-lined part.

The manufacturing process known for this type of tiles starts with the treatment of said bulk raw material used to make the support. Thus, said raw materials are acquired and later stored in silos.

The raw materials are placed in a battery of dosage vertical silos which will be used to load the mills; thus, the different raw materials are incorporated into the mill in the proportions indicated in the dosage sheet of each raw material. Next, the dosing of the additives is performed and at the same time as the loading of the solid materials, the necessary water is added for the grinding, in the required amount. Once the mills are loaded, the grinding takes place. This is performed in continuous mill. At this stage, the grinding material (alumina balls and silex stones) produce a particle size reduction until the desired granular metric distribution is obtained.

The addition of water and additives improves the efficiency of the operation and facilitates the processability of the product obtained (barbotine) which has high density and low viscosity. This stage is known as humid grinding.

Once the barbotine is obtained, it is unloaded in underground pits where it is mixed with the one obtained in different grinding processes to achieve the highest possible degree of homogenization.

From the homogenization pits, the barbotine goes to a pit for feeding the atomizer. From this pit, it is pumped to the atomizer being jet out from the crown through some nozzles which enable its pulverization inside the atomizer to the upper part thereof.

In the atomizer, the barbotine comes in contact with hot air (approximately at 600° C) which causes the sudden loss of humidity obtaining more or less spherical grains (with certain humidity content) called atomized powder. The atomized powder drops due to the gravity until the mouth of the atomizer from where it goes to a system of belts which carries it to vertical silos where it is stored for later feeding the presses.

The atomizer is regulated after reading the average humidity values of the atomized product, which is continuously performed through a system of automatic sampling.

At the colouring stage, the atomizing starts with the possibility of working with a previously dry coloured support or with white atomized product (neutral).

The dry colouring is carried out mixing the different colouring oxides (blue, orange, green, etc) with the white atomized product, obtaining monochromatic powder which can be mixed with other tones and produce supports with the desired colour. The colouring is carried out by means of dosage of a controlled amount of colouring oxide on white atomized product, which later goes to a mixer to homogenize said mixture and obtain a stable tone.

At the atomizing and dry press forming stage, the atomized powder is initially located in the rest silos. The regulation of the flow thereof enables the correct feeding of the presses as well as the optimum work humidity.

Once the atomized powder is in the press, it is inserted through a mobile cart in the alveoli of an entering punch mould type, on which the upper punches descend, inserting themselves therein and compressing the atomized product until a product with certain density, thickness, shape and dimension characteristics is obtained.

The compression is carried out by means of hydraulic presses which use a dynamic oil circuit to transmit certain force to the punches of the mould, which while descending on the atomized powder, located inside the alveoli, exert a pressure (300-450 bar (kg/cm²) depending on the product being manufactured, and form what will become the support of the final product. This process is carried out in two continuous stages; the first consists of making a first pressing at a lower force to extract the air which can remain between the particles to be formed. At the second stage, the pressing is performed at work pressure and it is possible to form the piece with the demandable characteristics.

Once the piece is made, it goes to a vertical automatic drying shed. This drying shed collects the pieces in baskets which go up inside the drying place while it is inserted hot air (at about 200° C) generated by a burner to eliminate a great part of the humidity of the piece (necessary, on the other hand, to be able to form it during the pressing) and heat the surface thereof up to certain temperatures (over 100° C) for about 30 minutes, to enable a later enamelling thereof. Once the piece has completed the drying cycle, it goes directly to the enamel lines.

Up to that moment, the white ceramic scrap from the waste of the manufacturing process before firing are incorporated to the process again so that said crude pieces are deposited in a homogenization pit containing water and an agitation system. With this process barbotine is obtained again and, in the appropriate conditions, it is pumped to the atomizer to obtain atomized product again which will be later pressed to form new pieces. In the case of coloured ceramic scrap, it is separated and rejected, being delivered to an external manager to be later treated as residue.

EP1726576 shows the use of coloured waste material in the making of a ceramic tile. This document discloses a coloration agent for ceramic products, and colored clay using the same. This coloration agent contains metal powder separated from the shot waste and uses metal oxide powder contained in the metal powder as a basic raw material. The colored clay is prepared by admixing the coloring agent with a clay raw material.

EP1721877 shows the use of coloured waste material in the making of a ceramic tile. This document shows a process to recover and recycle green ceramic material, in which recovered caked material is recovered from a ceramic crockery process. The recycled ceramic material represents up to 20% wt. of the ceramic product.

### DESCRIPTION OF THE INVENTION

The invention refers to a procedure for manufacturing ceramic tiles in porcelain stoneware, comprising a support and surface decoration, through dry pressing of the atomized product from barbotine, reusing the coloured crude ceramic scrap from waste and rejected products from the conventional productive line and the powder from solid particle aspiration and filtration systems in said manufacturing lines, for its later incorporation in the manufacturing process to obtain a coloured atomized product which could be called second generation product.

The process of tile manufacturing formed with second generation coloured atomized product is similar to the known manufacturing procedure, except in relation to the re-use/valuation of the coloured crude ceramic scrap which, in the case of white ceramic scrap, up to now, was reincorporated to the manufacturing process and the rejected colouring. With the tiles object of this memory, the coloured ceramic scrap is re-used so that a new infrastructure line is developed which enables to completely separate the coloured crude ceramic scrap from the white crude ceramic scrap, creating a line of re-use of the former which does not interfere with the latter.

Thus, re-use methodologies have been structured so that the white crude ceramic scrap never coincides with the coloured crude ceramic scrap. In this way, when it is desired to produce atomized product from the re-use of ceramic scrap and coloured aspiration powder, the stock of coloured crude ceramic scrap is carried to a homogenization pit, mixed with water, taken to certain density and viscosity and atomized in the same way as white crude ceramic scrap.

The powder from the common aspiration circuit and filtration both of white powder and coloured powder, which has been previously deposited in big bag sacks, is also incorporated to the homogenization pit and therefore, to the process. Next, the process continues in a similar way to the forming by pressing of pieces from the white or neutral atomized product.

The advantages of the pieces from second generation coloured atomized product are the following:
- No additional consumption of raw materials, except for the ones used in the manufacturing of first generation atomized product.
- No previous grinding. The barbotine is obtained after mixing and agitation before the pumping for its atomization.
- Manufacturing of ceramic tiles from the use of crude ceramic scrap from the rejected products in the manufacturing line.
- Manufacturing of ceramic tiles from the use of crude ceramic scrap from the rejected products in the manufacturing line which was previously disposed of, generating a residue which had to be delivered for its treatment.
- The product obtained can be used to form pieces both "pure" (100% coloured ceramic scrap), and "mixed" (percentages of coloured crude ceramic scrap + white ceramic scrap).
- It can be enamelled with more or less complex decorations.
- The technical services are equivalent to those of the product resulting from the atomization after the grinding.

### BRIEF DESCRIPTION OF THE DRAWINGS

The following one is a brief description of a series of drawings which will help understand the invention better and which are clearly related to an embodiment of said invention which is presented as a non-limiting example thereof.

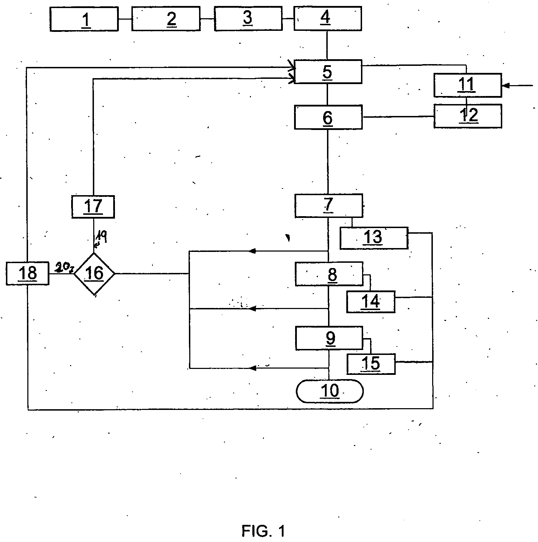

Figure 1 is a flow chart showing the ceramic scrap recovery process and its incorporation to the global process, showing both lines (coloured and white crude ceramic scrap).

The references shown in figure 1 correspond to the following stages of the procedure:
1. - Dosage
2. - Grinding
3. - Sieving
4. - Homogenization
5. - Atomization
6. - Storage
7. - Pressing
8. - Drying
9. - Enamelling
10. - Final product
11. - Coloring
12. - Homogenization
13. - Pressing powder aspiration and filtering
14. - Drying powder aspiration and filtering
15. - Enamel powder aspiration and filtering
16. - Separation of white and coloured crude ceramic scrap
17. - Homogenization of white crude ceramic scrap
18. - Homogenization of coloured crude ceramic scrap
19. - Residue line white crude ceramic scrap
20. - Residue line coloured crude ceramic scrap '

### DESCRIPTION OF A PREFERRED EMBODIMENT OF THE INVENTION

The tile manufacturing process of the invention comprises the following stages:
- A first stage of dosage (1) of the appropriate amounts of raw material, additives and the water necessary for the grinding.
- A second stage of humid grinding (2) in which there is a reduction of particle size until the desired granular metric distribution is attained.
- A third stage of sieving (3).
- A fourth stage in which the barbotine obtained is unloaded in, pits for its homogenization (4) with the barbotine obtained in different grinding processes to obtain the highest possible degree of homogenization.
- A fifth stage in which the homogenized barbotine is inserted in the atomizer for its atomization (5), producing atomized powder.
- At a sixth stage the first and second generation crude atomized powder is stored (6) in silos where, optionally, it could have been previously coloured in a colouring stage (11) with colouring oxides generating the coloured atomized product, to be later inserted in a mixer for its homogenization (12).
- A seventh pressing stage (7).
- An eighth drying stage (8).
- A ninth enamelling stage (9) to finally obtain the final product (10) before the firing.

The use of the white or neutral crude atomized residue and the coloured crude atomized residue from the waste and rejected products of the production line of conventional pressing (7), drying (8) and enamelling (9), called white crude ceramic scrap and coloured crude ceramic scrap, is performed by incorporating a stage of separation (16) of the residues of the pressing (7), drying (8) and enamelling (9) stages, which enables the total separation in two independent production lines, one for white crude ceramic scrap (19) and another one for coloured crude ceramic scrap (20).

The coloured crude ceramic scrap is inserted in an independent homogenization pit (18), in which it is also incorporated the powder from the aspiration and filtration systems (13, 14 and 15) of the pressing (7), drying (8) and enamelling (9) stages, to be reincorporated to the process of tile manufacturing in the atomization stage (5) to generate a second generation coloured atomized powder.

The white crude ceramic scrap obtained in the separation stage (16) is also sent to an independent homogenization stage (17) for its later reincorporation into the atomization stage (5) of the manufacturing process to generate a second generation white or neutral atomized powder.

In the system of filtration of aspiration powder (13, 14, 15) from the pressing, drying and enamelling lines, said powder is collected in solid form and incorporated into the homogenization pits (18) of coloured crude ceramic scrap for its re-use. This is attained enabling the filter unload system so that the filtered powder can be collected in big bag sacks, weighted and incorporated in solid form to the pits of crude ceramic scrap.

On the other hand, a storage area has been assigned to keep the containers from the collection of coloured crude ceramic scrap separated from those from the white crude ceramic scrap in order to avoid its mixing during the agitation and homogenization (17 and 18) stages. Later, the second generation atomized powder obtained, is sent to a concrete battery of silos, being said silos the ones in charge of feeding the hoppers of the presses through which the support of the tile is to be manufactured.

## Claims

1. Ceramic tile manufacturing procedure comprising:
- a first dosing stage (1) of the appropriate amounts of materials for the grinding,
- a second grinding stage (2) in which the particle size reduction takes place until the desired granular metric distribution is obtained,
- a third sieving stage (3),
- a fourth stage in which the obtained barbotine is unloaded in pits for its homogenization (4),
- a fifth stage in which the homogenized barbotine is introduced in the atomizer for its atomization (5), producing crude atomized powder,
- in a sixth stage the atomized powder is stored (6) in silos where optionally it can be previously coloured in a colouring stage (11) with colouring oxides producing a coloured atomized product for later introducing it in a mixer for its homogenization (12) before the storing (6), or else, the crude atomized powder can be directly taken to the seventh pressing stage (7) without previously colouring it,
- a seventh pressing stage (7)
- an eighth drying stage (8),
- a ninth enameling stage (9),
**characterized in that** the white atomized residue and the colored atomized residue from the waste and rejected products of the conventional pressing (7), drying (8) and enameling (9) stages, called white crude ceramic scrap and colored crude ceramic scrap, respectively, are re-used by incorporating them in the manufacturing process, from a separation stage (16) which enables to completely separate the white crude ceramic scrap from the colored crude ceramic scrap, in two independent production lines, one for the white crude ceramic scrap (19) and another one for the colored crude ceramic scrap (20), for its later reincorporation to the tile manufacturing process generating second generation atomized powder.

2. Ceramic tile manufacturing procedure according to claims 1 and 2, **characterized in that** the white crude ceramic scrap separated in the separation stage (16) is introduced in an independent homogenization pit (19) for its later reincorporation to the atomization stage (5) producing second generation white crude atomized powder.

3. Ceramic tile manufacturing procedure according to claim 1, **characterized in that** the coloured crude ceramic scrap in the separation stage (16) is introduced in an independent homogenization pit (18) for its later reincorporation to the atomization stage (5) producing second generation colored crude atomized powder.

4. Ceramic tile manufacturing procedure according to claim 3, **characterized in that** the powder from the aspiration and filtration systems (13, 14 and 15) of the pressing (7), drying (8) and enameling (9) stages is introduced in the homogenization pit (18) of the coloured crude ceramic scrap to be reincorporated to the tile manufacturing process in the atomization stage (5).

5. Ceramic tile manufacturing procedure according to claim 4, **characterized in that** the powder from the aspiration and filtration (13, 14, 15) of the pressing (7), drying (8) and enameling (9) lines is collected in solid form.

6. Ceramic tile manufacturing procedure according to claim 5, **characterized in that** the filtered powder is collected in big bag sacks incorporated to the filter unloading system to be weighted and incorporated in solid form to the crude ceramic scrap pits.

7. Ceramic tile manufacturing procedure according to the previous claims, **characterized in that** the containers or pools (17, 18) from the collection of coloured crude ceramic scrap are separated from the white crude ceramic scrap in a storage area in order to avoid its mixing during the agitation and homogenization.

8. Ceramic tile manufacturing procedure according to the previous claims, **characterized in that** the second generation atomized powder is sent to a concrete battery of silos feeding the hoppers of the presses through which the support of the second generation tile is to be manufactured.

## Patentansprüche

1. Verfahren zur Herstellung von Keramikfliesen, umfassend:
- einen ersten Dosierungsschritt (1) zum Dosieren der geeigneten Mengen von Materialien für die Mahlung,
- einen zweiten Mahlschritt (2), in welchem die Reduktion der Partikelgröße stattfindet, bis die gewünschte Korngrößenverteilung erhalten worden ist,
- einen dritten Siebschritt (3),
- einen vierten Schritt, in welchem der erhaltene Schlicker in Gruben für dessen Homogenisierung (4) entladen wird,
- einen fünften Schritt, in welchem der homogenisierte Schlicker in den Zerstäuber für dessen Zerstäubung (5) eingebracht wird, unter Erzeugung eines rohen zerstäubten Pulvers,
- in einem sechsten Schritt wird das zerstäubte Pulver in Silos gelagert (6), in welchen es wahlweise in einem Färbungsschritt (11) mit Farboxiden zuvor gefärbt werden kann, unter Erzeugung eines gefärbten zerstäubten Produkts für dessen spätere Einbringung in einen a Mischer für dessen Homogenisierung (12) vor der Lagerung (6), oder ansonsten, kann das rohe zerstäubte Pulver direkt zum siebten Pressschritt (7) gebracht werden, ohne es zuvor gefärbt zu haben,
- einen siebten Pressschritt (7)
- einen achten Trocknungsschritt (8),
- einen neunten Emaillierungsschritt (9),
**dadurch gekennzeichnet, dass** der weiße zerstäubte Rückstand und der gefärbte zerstäubte Rückstand aus den Abfällen und Ausschussprodukten der herkömmlichen Press- (7), Trocknungs- (8) und Emaillierungsschritte (9), jeweils weißer roher Keramikabfall und gefärbter roher Keramikabfall genannt, wiederverwendet werden, durch die Miteinbeziehung derselben im Herstellungsprozess, von einem Trennungsschritt (16) aus, welcher die vollständige Trennung des weißen rohen Keramikabfalls vom gefärbten rohen Keramikabfall ermöglicht, in zwei unabhängigen Fertigungslinien, eine für den weißen rohen Keramikabfall (19) und die andere für den gefärbten rohen Keramikabfall (20), damit sie später in den Fliesenherstellungsprozess wieder mit einbezogen werden, unter Erzeugung eines zweiten zerstäubten Erzeugungspulvers.

2. Verfahren zur Herstellung von Keramikfliesen nach den Ansprüchen 1 und 2, **dadurch gekennzeichnet, dass** der im Trennungsschritt (16) getrennte weiße rohe Keramikabfall in eine unabhängige Homogenisierungsgrube (19) eingebracht wird, damit er später in den Zerstäubungsschritt (5) mit einbezogen wird, unter Erzeugung eines zweiten weißen rohen zerstäuberten Erzeugungspulvers.

3. Verfahren zur Herstellung von Keramikfliesen nach Anspruch 1, **dadurch gekennzeichnet, dass** der im Trennungsschritt (16) getrennte gefärbte rohe Keramikabfall in eine unabhängige Homogenisierungsgrube (18) eingebracht wird, damit er später in den Zerstäubungsschritt (5) mit einbezogen wird, unter Erzeugung eines zweiten gefärbten rohen zerstäubten Erzeugungspulvers.

4. Verfahren zur Herstellung von Keramikfliesen nach Anspruch 3, **dadurch gekennzeichnet, dass** das Pulver aus den Ansaugungs- und Filtrierungssystemen (13, 14 und 15) der Press- (7), Trocknungs- (8) und Emaillierungsschritte (9) in die Homogenisierungsgrube (18) des gefärbten rohen Keramikabfalls eingebracht wird, damit es in den Fliesenherstellungsprozess im Zerstäubungsschritt (5) mit einbezogen wird.

5. Verfahren zur Herstellung von Keramikfliesen nach Anspruch 4, **dadurch gekennzeichnet, dass** das Pulver aus den Ansaugungs- und Filtrierungssystemen (13, 14, 15) der Press- (7), Trocknungs- (8) und Emaillierungslinien (9) in fester Form gesammelt wird.

6. Verfahren zur Herstellung von Keramikfliesen nach Anspruch 5, **dadurch gekennzeichnet, dass** das filtrierte Pulver in großen Säcken gesammelt wird, welche im Filterentladungssystem mit einbezogen sind, damit es in fester Form in die Gruben für rohen Keramikabfall eingewogen und mit einbezogen werden.

7. Verfahren zur Herstellung von Keramikfliesen nach den vorhergehenden Ansprüchen, **dadurch gekennzeichnet, dass** die Behälter oder Reservoirs (17, 18) für die Sammlung vom gefärbten rohen Keramikabfall vom weißen rohen Keramikabfall in einem Lagerbereich getrennt werden, um deren Mischung während des Rührens und Homogenisierens zu vermeiden.

8. Verfahren zur Herstellung von Keramikfliesen nach den vorhergehenden Ansprüchen, **dadurch gekennzeichnet, dass** das zweite zerstäubte Erzeugungspulver zu einer konkreten Gruppe von Silos geschickt wird, welche die Trichter der Pressen speisen, durch welche die Auflage der zweiten Erzeugungsfliese hergestellt werden soll.

## Revendications

1. Procédé de fabrication de carreaux en céramique comprenant :
- une première étape de dosage (1) des quantités appropriées des matériaux de broyage,
- une deuxième étape de broyage (2) dans laquelle la réduction de taille de particules a lieu jusqu'à l'obtention de la distribution métrique granulaire voulue,
- une troisième étape de tamisage (3)
- une quatrième étape dans laquelle la barbotine obtenue est déchargée dans des puits pour sa homogénéisation,
- une cinquième étape dans laquelle la barbotine homogénéisée est introduite dans l'atomiseur pour son atomisation (5) en produisant une poudre atomisée brute
- dans une sixième étape la poudre atomisée est stockée (6) dans des silos où optionnellement elle peut être colorée lors d'une étape de coloration (11) avec des oxydes colorants produisant un produit atomisé coloré pour plus tard l'introduire dans un mixer pour son homogénéisation (12) avant le stockage (6), ou bien, la poudre atomisée brute peut être emportée directement à la septième étape de pressage (7) sans la colorer au préalable,
- une septième étape de pressage (7)
- une huitième étape de séchage (8),
- une neuvième étape d'émaillage
**caractérisé en ce que** le résidu atomisé blanc et le résidu atomisé coloré des produits de déchet et rejetés des étapes conventionnelles de pressage (7), de séchage (8) et d'émaillage (9), dits déchets céramiques bruts blancs et déchets céramiques bruts colorés, respectivement, sont réutilisés en les incorporant dans le procédé de fabrication, à partir d'une étape de séparation (16) qui permet de séparer complètement les déchets céramiques bruts blancs des déchets céramiques bruts colorés, en deux lignes de productions indépendantes, une pour les déchets céramiques bruts blancs (19) et une autre pour les déchets céramiques bruts colorés (20), pour sa postérieure réincorporation au procédé de fabrication de carreaux en générant une poudre atomisé de deuxième génération.

2. Procédé de fabrication de carreaux en céramique selon les revendications 1 et 2, **caractérisé en ce que** les déchets céramiques bruts blancs séparés lors de l'étape de séparation (16) sont introduits dans un puits d'homogénéisation indépendant (19) pour sa postérieure réintroduction lors de l'étape d'atomisation (5) en produisant une poudre atomisée brute blanche de deuxième génération.

3. Procédé de fabrication de carreaux en céramique selon la revendication 1, **caractérisé en ce que** les déchets céramiques bruts colorés lors de l'étape de séparation (16) sont introduits dans un puits d'homogénéisation indépendant (18) pour sa postérieure réincorporation lors de l'étape d'atomisation (5) en produisant une poudre atomisé brute colorée de deuxième génération.

4. Procédé de fabrication de carreaux en céramique selon la revendication 3, **caractérisé en ce que** la poudre des systèmes d'aspiration et de filtration (13, 14 et 15) des étapes de pressage (7), de séchage (8) et d'émaillage est introduite dans le puits d'homogénéisation (18) du déchets céramiques bruts colorés a réincorporer au procédé de fabrication de carreaux lors de l'étape d'atomisation (5).

5. Procédé de fabrication de carreaux en céramique selon la revendication 4, **caractérisé en ce que** la poudre des systèmes d'aspiration et de filtration (13, 14 et 15) des lignes étapes de pressage (7), de séchage (8) et d'émaillage est recueillie à l'état solide.

6. Procédé de fabrication de carreaux en céramique selon la revendication 5, **caractérisé en ce que** la poudre filtrée est recueillie dans des grands sacs incorporés au système de décharge de filtre à peser et incorporer à l'état solide aux puits de déchets céramiques bruts.

7. Procédé de fabrication de carreaux en céramique selon les revendications précédentes, **caractérisé en ce que** les conteneurs ou bassins (17, 18) de recollection du déchets céramiques bruts colorés sont séparés des déchets céramiques bruts blancs lors d'une zone de stockage afin d'éviter son mélange pendant l'agitation et l'homogénéisation.

8. Procédé de fabrication de carreaux en céramique selon les revendications précédentes, **caractérisé en ce que** la poudre atomisée de deuxième génération est envoyée à une batterie en béton de silos alimentant les trémies des presses à travers lesquelles doit être fabriqué le support du carreau de deuxième génération.
